Europäisches Patentamt

European Patent Office

Office européen des brevets

(19)

(11) Publication number: **0 176 147**
**A1**

(12) **EUROPEAN PATENT APPLICATION**

(21) Application number: **85201489.3**

(22) Date of filing: **18.09.85**

(51) Int. Cl.⁴: **F 16 F 1/36**
**F 16 F 9/30, A 63 C 5/12**

(30) Priority: **28.09.84 NL 8402976**

(43) Date of publication of application:
**02.04.86 Bulletin 86/14**

(84) Designated Contracting States:
**AT BE CH DE FR GB IT LI LU NL SE**

(71) Applicant: **N.V. BEKAERT S.A.**
**Bekaertstraat 2**
**B-8550 Zwevegem(BE)**

(72) Inventor: **Wieme, André**
**Hinnestraat 6**
**B-8550 Zwevegem(BE)**

(74) Representative: **Ryckeboer, Leo et al,**
**c/o N.V. BEKAERT S.A. Department Industrial Property**
**Leo Bekaertstraat 2**
**B-8550 Zwevegem(BE)**

(54) **Element for damping vibrations in rigid articles and articles thus damped.**

(57) A plate-shaped element for damping mechanical vibra-
tions in a rigid article whereby said element is attached on or
near a surface of the article and comprises a number of
thread-like members (4) which are embedded in a visco-
elastic material and wherein also at least one plate (5) is
embedded in this viscoelastic material (3), which plate after
application of the element (2) on the article is located
between the neutral axis (19) of the article (1) and the
thread-like members (4). The members (4) may be steel
cords. The damped rigid article may be a ski.

FIG.1

Croydon Printing Company Ltd.

0176147

# ELEMENT FOR DAMPING VIBRATIONS IN RIGID ARTICLES AND ARTICLES THUS DAMPED.

The invention relates to a plate-shaped element for damping mechanical vibrations in rigid articles whereby, the rigid article is covered with said element, as well as to the thus damped article.

It is known from US Patents Nos. 4 278 726, 4 412 687 and 4 420 523 of Applicant that vibrations in rigid articles (e.g. plates, laths, profiles, laminated structures, skis) can be damped by applying at or near their surfaces a plate-shaped damping element in the form of a layer of viscoelastic material in which twisted fibre bundles are embedded. The damping effect in these known articles is already quite appropriate, but for certain applications the weight and price of the damped elastomer strips is fairly high with respect to the obtained damping capacity.

Quite surprisingly it has been found that a particularly high damping capacity is obtained by inserting a plate structure into the layer of viscoelastic material of the plate-shaped damping element in addition to the fibre bundles incorporated therein. According to the invention, the plate structure is inserted between the fibre bundles and the contact surface with the article to be damped in case where the plate-shaped damping element is being applied on the article. When the plate-shaped damping element is applied near the surface of the article to be damped the fibre bundles will lie closer against the adjacent exterior surface of the article than does the rigid plate structure. Then this plate structure will be closer to the centre (neutral axis) of the article than the fibre bundles.

In case this plate structure is relatively unexpensive compared with the applied viscoelastic material, then it will be possible to lower the cost price of the damping element, as the operation of applying the plate structure does not involve any substantial extra costs.

Moreover, the application of the plate-shaped element has the effect that the distance between the fibre bundles and the neutral axis of the article to be damped becomes as large as possible. This strongly adds to the damping capacity. Finally, the total weight of the plate-shaped element will be kept low when the plate element is of a relatively light-weight compared with the viscoelastic material.

A number of embodiments of the invention will now be described in greater detail whereby reference will be made to the adjoining drawings :

Figure 1 is a perspective and cross-sectional view of a rigid article and of a plate-shaped element according to the invention which is applied on the article ;

Figure 2 is a cross-sectional view of a ski body in which a plate-shaped element according to the invention is incorporated ;

Figure 3 is a schematic view of a test setup for examining the vibration absorbing capacity ; and

Figure 4 is a perspective view of yet another embodiment of the plate-shaped element according to the invention.

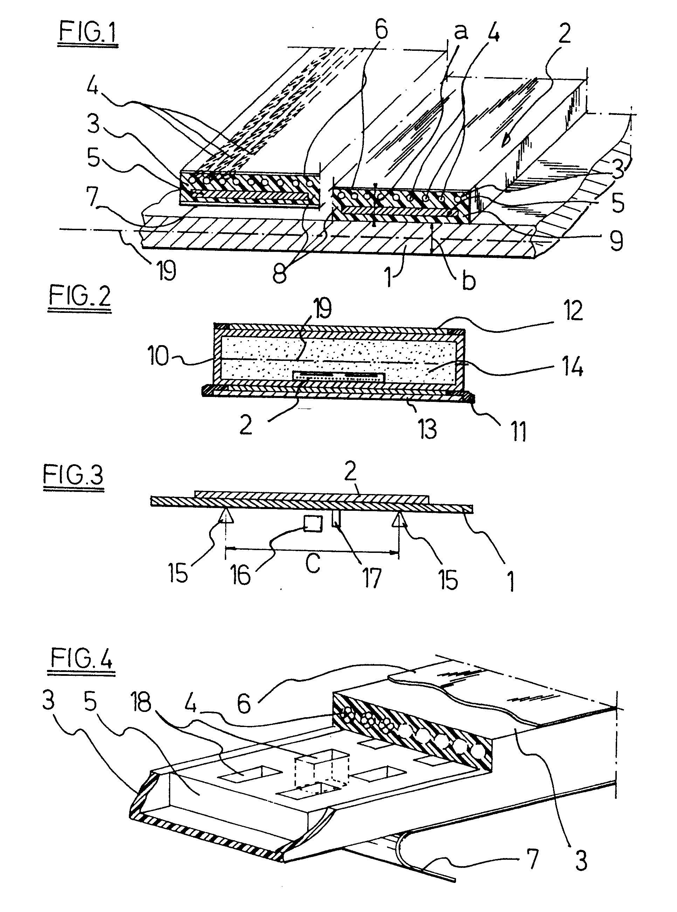

The embodiment as shown in Figure 1 concerns a plate-shaped element 2, e.g. in the form of a lath (slat or strip) for damping mechanical vibrations. This element is applied with one of its plane sides on a surface of the rigid article 1 to be damped and bonded thereto, e.g. by glueing. The element 2 itself comprises viscoelastic material 3 in which a number of thread-like members 4 are embedded and also at least one plate 5. This plate 5 is located between the filaments 4 and the article 1. It is evident that in case the material 3 is self-adhesive, the element 2 will be covered with protective foils 6 and 7. The foil 7 will then be easily removable to bring the self adhesive material 3 in direct contact with the surface of the article 1. Such foils are well-known, e.g. siliconized paper can be used for this purpose. The covering foil 6 will e.g. be kraft paper, light cardboard, cellophane or another type of plastic or aluminium foil.

The thread-like members 4 may be monofilaments or fibre bundles, in particular twisted multifilament bundles. Preferably these threads 4 will have a modulus of elasticity which is at least of the same order of magnitude as that of the article 1. Hence, on an average, textile filaments or yarns will create but a small damping effect in elements 2 that e.g. are glued to steel plates. Steel wire in such elements will offer a substantially better damping result. However, relatively thick steel wires reduce the flexibility of the elements 2.

When the articles 1 to be damped have a surface with e.g. recessions or bent sections, such as e.g. car body plates, then the rigidity of the elements 2 should not be too high. Indeed, the elements 2 must adequately follow the contour of the article surface without in the course of the time becoming detached from the article to be damped in article surface areas with stronger curvatures.

- 4 -

When, e.g. steel plates or steel profiles must be damped, the thread-like members 4 will preferably be steel cords. Steel cords with a weight per m of length identical to that of a particular steel wire are indeed much more flexible than said wire, which is a benefit to the flexibility of element 2. Steel cords can also be cut more easily than steel wires with the same weight per meter. In addition, the damping capacity of the twisted structure inherent to cords is better than that of wires with the same weight per meter. This improved damping capacity is linked a.o. to the increase in specific contact surface between the cord 4 and the surrounding material 3 and to the helical shape of the cord filaments. Also for rigid articles 1 whose modulus is lower than that of steel, the application of steel cord in the viscoelastic material is recommendable since the intrinsic damping capacity of the plate-shaped element 2 is then particularly effective, so that a smaller amount of the plate-shaped element 2 may suffice.

The viscoelastic material 3 may be an elastomer such as e.g. vulcanized rubber. It may also be a less expensive mastic material, for example based on butyl rubber, such as Exxon butyl 268 and mixed with suitable additives, e.g. to counteract aging. These materials offer the advantage to better damping the high-frequency vibration components than for example vulcanized rubber. To render this material self-adhesive it must of course be mixed with a adhesiveness-stimulating material, for example based on Escorez (pulysobutylene) or Vistanex MML 100 (trademark of BASF). Preferably, the material 3 will also resist furnace temperatures up to 190°C during 30 minutes or 160°C during one hour without hardening (to prevent it from losing its specific viscoelastic properties).

In principle, the plate 5 may consist of any material having a certain rigidity, such as for example cardboard, veneer, plastic, aluminium, etc. If so desired, a cardboard plate 5 may be treated preliminarly with a resin solution and be dried to strengthen the cardboard. However, it is not excluded to insert sheets with a more pronounced flexibility (for example coarse textile fabrics or fibre webs, reinforced, rigidified or not), instead of relatively rigid plates 5 insofar as this is permitted by the manufacturing method and the damping requirements of element 2.

The plate 5 may cover the entire surface of the element 2, but preferably it will have a smaller surface so that in at least a few areas of the plate 5, the viscoelastic material on one side thereof will be in contact with the viscoelastic material on the other side. The thus originating bridge connections in passages 8 in or between the plates 5 or in the passages 9 around edges of the plate 5 considerably increase the damping capacity. It has been found that the total surface of the passages 8 and 9 (according to a cross-section parallel to plate 5) preferably equals 8 to 20 percent of the total contact surface between the element 2 and the plate 1.

In order to achieve optimal simultaneous damping of vibrations in different frequency regions it may be recommendable to conceive plate 5 in such a way that it comprises two or more adjacent strips with intermediate spaces 8 whereby the strips are made of different materials : e.g. one strip of cardboard and one (or more) strips of a suitable textile fibre web, wood veneer, relatively thick PVC foil, etc.

The thickness a of the element 2 will be selected as a function of the thickness and shape of the article to be damped in the common contact zone. For a metal plate, e.g. a conventional flat steel plate with a thickness b between 0.5 mm and 1.5 mm, the thickness a of the element 2 glued to it will be approximately 1.5 mm. From the point of view of cost price, an optimal a/b ratio will be located between 1 and 2.5. However, a higher thickness ratio (up to 4) further stimulates the damping capacity and may be useful provided the cost price or weight and/or thickness of the element 2 do not become too high.

Obviously, it is also possible to cover a plate 1 with one or more elements 2 at both sides and over at least a part of its surface. To achieve damping in various directions, the direction of the fibre bundles 4 in the element 2 on one side of the plate 1 may be chosen differently from the bundle direction in the element 2 on the other side of the plate 1. When the elements 2 are strip-shaped, which is often the case, two or more strips can be —cross-wisely fixed to the element 2 whereby the strips in the intersection zone are connected to each other. Damping in various directions is generally also achieved in this way. The strips 2 may also be applied in different directions on the same side of the article without intersecting one another. Networks of damping strip elements 2 can also be applied in accordance with US Patent Specification No. 4 420 523. If, on the other hand, it is desired to dampen e.g. a T-profile with strips 2 according to the invention, then one of these strips can be glued to the leg of the profile and one to the other portion.

The wires 4 will then extend in the longitudinal direction of the profile. However, the strip length will preferably be in excess of 10 cm..

It is also conceivable to include one or more damping elements 2 in a laminate near one or both of its surfaces. For example, in a laminate or multilayer wall or plate or in container walls, in profiles, tube walls, or in ski bodies it is possible to embed strips 2 during manufacture of the laminates. If so desired, the protective foils 6 and 7 will then be removed prior to incorporating the element 2 into the laminate.

Figure 2 is a cross-sectional view of a ski body comprising e.g. a hard foam material core 14 in a reinforced plastic shell 10, a covering plate 12 and corner edges 11, between which a gliding sole layer 13 is fitted. In the surface of the core 9, near the gliding sole layer 13 a damping strip 2 according to the invention is embedded such as described in the US Patent No. 4 420 523. Of course, also a netting structure composed of these damping strips can be incorporated as described in said patent specification. A damping structure 2 can, as desired, be incorporated near the top and/or the tail of the ski or in the central portion under the ski shoe attachments.

The abovementioned temperature resistance of the viscoelastic material 3 is necessary in cases of hot shaping in moulds. For example, this may be applicable in the course of the hardening process of ski shells 10 during the manufacture of a ski. This property is also necessary when e.g. damping elements 2 are glued to steel car body plates which are subsequently lacquered and passed afterwards through a furnace for hardening the lacquer. Moreover, a lacquer coating may further increase the damping capacity.

Example I

A strip-shaped plate element 2 having the following features was composed :

|  |  |
|---|---|
| length | 380 mm |
| width | 30 mm |
| thickness (a) | 1.5 mm (approx.) |
| weight | 29 g |

In the lower half of the element 2 and over its full length and parallel to each other 2 cardboard strips 5 each having a thickness of 0.5 mm and a width of 13 mm were embedded in a mastic-like viscoelastic material 3 (Henkel) based on a mixture containing butyl rubber. The material 3 also contained an adhesiveness-stimulating material so that the material became self-adhesive. The rectangular passage 8 of material 3 between the two strips 5 was 2 mm wide while the rectangular edge passages 9 each had a width of 1 mm. The total cross-sectional surface of the passages 8, 9 thus was approximately 12.5 percent of the entire surface of foil 7. The underside of the element 2 was covered with a removable protective foil 7 of siliconized paper. The layer of material 3 between the undersides of the strips 5 and the foil 7 had a thickness of approximately 0.2 mm.

The upper half of the element 2 comprised a layer of the same material 3 as the lower half. This layer had a thickness of approximately 0.8 mm and comprised a series of 27 parallel steel cords type 4 x 0.25 (4 twisted steel wires of high carbon steel with a brass layer to improve adhesion to rubber and with an individual wire diameter of 0.25 mm). The adjacent cords alternately have a left and right lay. Finally, a kraft paper strip 6 was glued to the upper side.

The foil 7 was removed and the element 2 with the free self-adhesive underside was pressed in lengthwise direction onto a steel lath 1 with a width of 30 mm, a thickness of 4 mm and a length of 500 mm. As shown in Figure 3, subsequently the lath 1 was symmetrically supported in two points 15 spaced apart at a distance c of 276 mm.

- 9 -

These supporting points 15 correspond with the node of lath 1 when it is subjected to a vibration when being bent halfway between the points 15 and subsequently released. The bending is achieved by pulling the lath midway between the supporting points 15 against a magnet 16 at a given deflection distance under the lath 1. In the vibration test according to the examples a deflection distance of 0.8 mm was applied. Obviously, as shown in Figure 3, the element 2 was attached in its lengthwise and crosswise directions symmetrically over the supporting points 15 on the surface of lath 1 as shown in figure 3. Under lath 1 an accelerometer 16 was attached to record the fading vibration caused by deflecting the lath 1 with element 2 downwards by means of an electric magnet 16 and subsequently releasing it by switching off the magnet 16.

The damping values $\gamma_t$ of the system were calculated according to the formulas $\gamma_t = 8,68 \; \nu_t$ with $\nu_t : 1/t \ln a_o/a_t$, where $a_o$ is the measured amplitude of the first vibration (read on the oscilloscope connected with the accelerometer) and $a_t$ the amplitude of the fading vibration after time t which for these tests was set at 100 msec. For the vibration damping of the fading vibration of the system lath 1 with element 2 as described above, the following relative values were found with t = 0.1 sec : $a_o = 58$, $a_t = 6$ which resulted in a damping value of $\gamma_t = 196.92$ dB/sec. This value is particularly high compared with the damping values found for alternative plate-shaped elements 2 as described in the examples below.

EXAMPLE 2

The steel lath 1 with the dimensions as decribed above was subsequently covered with an element 2 according to the symmetrical application conditions as described above. The fading vibration of the thus damped system was recorded according to the abovementioned method. The construction of the element 2 was as follows :

| length | 380 mm |
| width | 30 mm |
| thickness (a) | 1.5 mm |

Instead of the two cardboard strips 15 from the previous example now a cardboard layer was applied over the width of the strip 2 having a total width of 29 mm and 2 rows of rectangular perforations 18 as shown in Figure 4. These perforations each had a length of 8 mm and a width of 3 mm, while the distance between successive perforations in the same row was 20 mm. In this way the total cross surface of the passages 8, 9 was approximately 9 percent of the surface of the covering foil 7. The measured damping value was $\delta_t$ = 178.3 dB/sec.

EXAMPLE 3

For the sake of comparison, in the same vibration test the plate-shaped element according to Figure 1 and with the abovementioned dimensions, was glued upside down on a steel lath 1, i.e. with the steel cords 4 between the cardboard strips 5 and the lath 1. This resulted in a damping value $\delta_t$ = 115.33 dB/sec. From this can clearly be deduced that a decrease of the distance of the cords 4 to the neutral axis 9 of the article 1 substantially lowers the damping capacity.

EXAMPLE 4

Instead of the two cardboard strips 5 according to example 1, in this test a full cardboard layer was inserted over the full width of the element 2 (width of cardboard layer 30 mm). All other characteristics of the construction of element 2 and testing conditions of the system were the same as those in example 1. The damping value $\gamma_t$ now was 87 dB/sec. This shows that the presence of passages 8, 9 filled with viscoelastic material 3 (as in examples 1, 2 and 3) has a favourable influence on the damping.

EXAMPLE 5

Under the same conditions as above a strip-shaped damping element 2 with a thickness of 1.5 mm was applied on a steel lath 1, whereby the steel cords 4 were located between the cardboard plate 5 and the contact surface with lath 1. In addition, the cardboard plate 5 (having a thickness of 0.5 mm) was located entirely on top of the element 2. This means that no viscoelastic material layer 3 was present on the cardboard plate 5, and neither was a covering foil 6. The damping value now amounted to $\gamma_t$ = 62 dB/sec. From this result one might conclude, when comparing with example 3, that here a full embedment of the plate 5 is preferred.

EXAMPLE 6

Here the test was repeated with a damping element 2 in the position and with the construction and dimensions as in example 5, but in which the steel cords were omitted. This resulted in a particularly low damping value $\gamma_t$ = 18 dB/sec, which points to the necessity for a presence of fibre bundles 4 in the material 3, if a proper damping capacity is pursued.

EXAMPLE 7

Again for comparison, an element 2 was glued to lath 1, having a width of 30 mm, a thickness of 1.2 mm and in whose centre only 29 steel cords of the construction 3 x 0.15 were embedded. The element was provided with a covering paper sheet 6. Hence, no damping plate structure 5 was present. The damping value $\gamma_t$ here

reached 97.8 dB/sec, which is higher than in example 4. Despite that in this case the strip was thinner than in the previous examples, in absolute terms it still contains $\pm$ 10 % more of the viscoelastic material 3. It is not excluded that in the cardboard plate 5 according to example 4 a partial internal delamination occurs during the vibration. This delamination would then be responsible for the lower damping values. One might also conclude that this tendency towards delamination is counteracted by the presence of passages 8 and 9 filled with viscoelastic material 3, as described in examples 1 and 2, which embodiments yield considerably higher damping values. It is evident that the internal cohesion of the cardboard plate 5 can also be raised by reinforcing it, e.g. by impregnating it with a resin. Creases in the cardboard layer 5, which extend transversely to the longitudinal direction of the strip-shaped element 2, must also be avoided.

EXAMPLE 8

Finally, the same steel lath 1 was covered with a conventional damping strip made of bitumen (thickness 3 mm, width 30 mm, length 380 mm, and weight 66 g). The damping value reached but 45 dB/sec. The manufacture of the plate-shaped elements 2 according to the invention can be done in the ordinary manner, viz. hot co-extrusion of the viscoelastic material 3 through a slot nozzle while adding the steel cords 4 and the plate or plates 5 which are passed in a suitable manner through the extrusion die. The extrusion temperature for a mastic-like substance 3 based on butylrubber shall be chosen in such a way that vulcanization or hardening tendencies are counteracted. Right before winding up the thus extruded strips or plates, the covering foils 6, resp. 7 are engaged and glued on both sides. For the sake of a smooth co-extrusion, whereby generally shear forces originate in various directions, it is therefore also recommendable that the plates 5 possess a certain rigidity.

In general, the insertion of a plate 5 having a relief in one or both of its surfaces will favour the damping capacity. Similarly, the application by glueing of a protetive foil 6, whose contact side with the viscoelastic material 3 possesses a relief, will improve the damping effect.

If so desired, it is also possible to incorporate two series of fibre bundles 4 in the element 2, which series extend perpendicularly to each other in order to produce damping in various directions. These two series may also be incorporated as a fabric having a warp and weft series. In this case, the manufacture will not be by means of co-extrusion, but rather by calendering various layers on each other, e.g. in the sequence : — foil 6, viscoelastic material 3, cords 4, again viscoelastic material 3, plates 5, viscoelastic material 3, and foil 7.

If desired, the plates 5 may, in this case, be replaced by more flexible sheet material. The incorporation of fibre bundles 4 in two series perpendicular to each other will be useful only when the shortest cross dimension of the surface of the thus made plate-shaped element (according to one of the bundle directions) is at least 10 cm.

CLAIMS

1. A plate-shaped element (2) for damping mechanical vibrations in a rigid article (1) whereby said element is attached on or near a surface of the article and comprises a number of thread-like members (4) which are embedded in a viscoelastic material (3), characterized in that also at least one plate (5) is embedded in this viscoelastic material (3) which plate (5) after application of the element (2) on the article (1) is located between the neutral axis (19) of the article (1) and the thread-like members (4).

2. An element (2) according to Claim 1, characterized in that the elements (4) are twisted filament bundles with a modulus of elasticity of at least the same order of magnitude as the modulus of the article (1).

3. An element (2) according to claim 2, characterized in that the twisted filament bundles are steel cords.

4. An element (2) according to Claims 1, 2 or 3, characterized in that the viscoelastic material (3) is self-adhesive and covered with a protective foil (6) on the side facing away from the article (1).

5. An element according to Claims 1 through 4, characterized in that the embedded plate (5) comprises passages (8) through and/or passages (9) around the edge of this plate (5) that are filled with viscoelastic material (3).

6. An element according to Claim 5, characterized in that the total surface of the passages (8, 9) amounts to 8 to 20 percent of the total contact surface between element (2) and the plate (1).

7. An element according to Claims 1 through 6, characterized in that the ratio of its thickness a to the thickness b of a metal plate (1) on which it is attached is between 1 and 4 in the common contact zone.

8. A damped rigid article characterized in that near or on at least one of its surfaces at least one plate-shaped element (2) according to any of the previous Claims is attached and whereby said element (2) extends over at least part of the surface of the article (1)

9. A ski body according to Claim 8, characterized in that at least one plate-shaped element (2) is fixed in it near the gliding sole layer (13).

10. A metal plate according to Claim 8, characterized in that the ratio of its thickness b to the thickness a of the element (2) attached to it is between 1 and 4.

11. A metal plate according to Claim 10, characterized in that the said ratio a/b is between 1 and 2.5.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 420 523 (BEKAERT) * Column 5, line 8 - column 6, line 19; figures 1-5 * | 1 | F 16 F 1/36 F 16 F 9/30 A 63 C 5/12 |
| D,A | | 2,3,8, 9 | |
| Y | GB-A-1 028 884 (LORD) * Page 1, lines 29-56; page 4, lines 17-46; figures 3-11 * | 1 | |
| A | | 5 | |
| A | AU-B- 59 213 (PEILLEX) * Page 6, paragraph 2 - page 10, paragraph 1; page 11, paragraphs 5,6; page 13, paragraph 3; figures 1-4 * | 1,2,5, 8,9 | |
| A | GB-A-2 000 571 (MESSERSCHMITT-BÖLKOW-BLOHM) * Frontpage; figures 1-6 * | 1,4,5, 8,9 | TECHNICAL FIELDS SEARCHED (Int. Cl.4) F 16 F G 10 K E 04 B E 04 H A 63 C |
| A | FR-A-2 216 889 (AEROSPATIALE) * Whole document * | 1,4,5, 8 | |
| A | DE-A-3 150 116 (VEB KOMBINAT UMFORMTECHNIK H. WARNKE) | | |
| | --- -/- | | |

The present search report has been drawn up for all claims

| Place of search THE HAGUE | Date of completion of the search 17-12-1985 | Examiner ESPEEL R.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## 0176147

**European Patent Office**

# EUROPEAN SEARCH REPORT

Application number

EP 85 20 1489

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| A | WO-A-8 204 454 (AKU STIKBYRAN) | | |
| | --- | | |
| A | EP-A-0 104 357 (V.D. BOOM) | | |
| | --- | | |
| A | DE-A-2 713 608 (LECHNER) | | |
| | --- | | |
| A | US-A-4 293 142 (DAVIGNON) | | |
| | --- | | |
| A | FR-A-2 237 653 (OLIN) | | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 17-12-1985 | ESPEEL R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82